# DEMANDE DE BREVET EUROPEEN

(11) **EP 0 541 424 A1**
(43) Date de publication de la demande: **12.05.1993**
(21) Numéro de dépôt: 92402941.6
(22) Date de dépôt: 29.10.1992
(51) Int. Cl.: F16D 3/84

(54) **Dispositif de protection et de retenue de lubrifiant pour joint de transmission articulé, et joint homocinétique ainsi équipé**

(30) Priorité: 30.10.1991 FR 9113390
(71) Demandeur: GLAENZER SPICER, F-78301 Poissy (FR)
(72) Inventeur: Orain, Michel, F-78700 Conflans Ste Honorine (FR)
(74) Mandataire: Polus, Camille

(57) **Abrégé**

Le joint de transmission (1) articulé, homocinétique, comprend un fût (12) entraîné en rotation par un croisillon (4) relié à un arbre (2). Le fût (12) est monté en rotation dans un carter (15).

Un boîtier (13) est fixé au carter (15). Son ouverture (22) est juste suffisante pour le débattement de l'arbre (1) mobile angulairement. Un élément intermédiaire (31) rotule contre une face interne sphérique (20) du boîtier, et sur une face sphérique externe (27) d'un élément suiveur (23) qui coulisse le long de l'arbre (1) tout en permettant la rotation de ce dernier grâce à des aiguilles (24). Les centres (b, d) des deux surfaces sphériques (20, 27) sont de part et d'autre des positions extrêmes (C1, C2) du centre d'articulation du joint.

Utilisation pour les joints à grande vitesse, grande dimension ou forte angularité usuelle de travail.

## Description

La présente invention concerne un dispositif de protection et de retenue de lubrifiant pour joint de transmission articulé, notamment joint homocinétique, destiné à assurer l'accouplement entre deux organes tournants, susceptibles de travailler sous angle.

La présente invention concerne également un joint homocinétique équipé d'un tel dispositif.

Il est connu par exemple dans le domaine de l'automobile d'assurer la retenue du lubrifiant et la protection indispensable au fonctionnement du mécanisme des joints homocinétiques équipant les arbres de transmission, par l'intermédiaire de soufflets élastiques reliant un bord ouvert d'un élément extérieur du joint, généralement en forme de fût, et le pourtour d'un arbre relié à un élément intérieur du joint, tel qu'un tripode ou croisillon.

Ces soufflets doivent remplir deux impératifs techniques difficilement conciliables:
- d'une part fermer d'une manière fiable et parfaite l'espace compris entre le fût extérieur du joint et l'arbre intérieur de manière à constituer une enceinte close hermétiquement, contenant le mécanisme et le lubrifiant;
- d'autre part être assez déformables pour assurer la pérennité de cette fermeture souple alors que l'arbre se débat angulairement et le cas échéant (dans le cas de joints coulissants) axialement relativement au fût, et que le soufflet est déformé cycliquement à une fréquence égale à la vitesse de rotation du joint lorsque le joint travaille sous angle;
- et en même temps, être assez rigides pour que la constante de rappel élastique en position neutre des plis soit suffisamment élevée pour leur assurer, en dépit de l'inertie du lubrifiant, une fréquence propre supérieure à la vitesse de rotation, pour que le soufflet tende à revenir de lui-même à sa position neutre, à une vitesse au moins égale à celle correspondant à la vitesse maximale de rotation et malgré le lubrifiant qui le charge intérieurement.

De nombreux travaux ont été effectués pour mettre au point des élastomères pour ces soufflets ainsi que des profils performants et des fixations adaptés aux applications de l'automobile (voir FR-A-1 342 249, 1 347 808, 1 347 809, 1 399 682, 1 482 069).

Les parties actives de ces soufflets ou plis présentent un diamètre que l'on s'efforce de maintenir en dessous de 100 mm pour des raisons de fiabilité, de stabilité et d'endurance. Ces soufflets donnent globalement satisfaction pour les cas d'utilisation les plus courants.

Il n'en demeure pas moins que la fiabilité et la longévité des soufflets conditionnent l'endurance des mécanismes homocinétiques qui ne survivent pas à la perte de lubrifiant consécutive à la détérioration de ces soufflets.

On peut considérer en effet, qu'environ 90% des mises hors service des joints homocinétiques sont initiées par la crevaison du soufflet et la perte du lubrifiant. Cette faiblesse est aggravée lorsque les joints articulés doivent tourner à haute vitesse, disons entre 2 000 et 10 000 tours/minute ou/et présenter un diamètre excédant 100 mm, disons pour des vitesses périphériques situées entre 15 et 50 mètres par seconde.

En effet:
- en un même laps de temps, le nombre d'alternances de la contrainte de flexion dans l'élastomère croît comme la vitesse de rotation, et la fatigue du matériau croît de même;
- les forces inertielles croissant comme le carré des vitesses, augmentent considérablement les contraintes;
- la pression centrifuge dans le lubrifiant croît comme le carré de la vitesse de rotation et comme le carré de la hauteur dynamique du lubrifiant et requiert une très grande résistance à l'éclatement des parois élastiques des soufflets;
- les mouvements axiaux de l'arbre des joints coulissants, compression et extension, sont accompagnés de surpression ou de dépression s'exerçant dans l'enceinte du mécanisme. Or ces modifications de la pression relative altèrent le profil des plis de manière erratique et deviennent inacceptables pour les joints de grand diamètre;
- la durée de vie exigée peut dans certains cas (transports ferroviaires et maritimes) être bien supérieure à celle permise par les soufflets élastiques;
- enfin les applications aux véhicules tout-terrain, de travaux publics, ou travaillant dans des conditions de températures extrêmes, multiplient les probabilités d'agressions mécaniques et les risques de déchirures et de perforations des soufflets conventionnels.

La paroi élastique du soufflet, de par sa masse et celle du lubrifiant retenu, et les forces centrifuges qui en résultent, présente une tendance à l'instabilité radiale similaire à celle d'un arbre de transmission au voisinage de sa vitesse critique. Cette tendance ne peut être combattue qu'en accroissant l'épaisseur de cette paroi et la rigidité du matériau utilisé. Mais on la rendrait alors inapte à clore l'espace libre et variable entre l'arbre et le fût pendant la rotation du joint sous angle.

Par exemple, pour un rayon de 125 mm et une vitesse de rotation de 2 500 tours/minute, la pression exercée par le lubrifiant sur la paroi du soufflet s'élèverait à 5 kg/cm² environ, ce qui représente sensiblement la pression de gonflage de pneumatiques haute pression.

On en arriverait à une structure armée ayant une rigidité et une inertie incompatible avec la mobilité nécessaire à la fonction de fermeture du joint, en particulier avec les déformations cycliques lors du fonctionnement sous angle.

Depuis le début du développement industriel de l'automobile, les transmissions longitudinales des véhicules à propulsion par les roues arrière ont représenté l'essentiel des lignes d'arbres à haute vitesse, avec des vitesses de rotation sensiblement quadruples de celles des transmissions latérales des véhicules à traction avant. Le seul joint disponible sur le marché et utilisé massivement est le cardan, joint non homocinétique et non coulissant dont l'angularité continue est limitée à 3° ou 6° selon la vitesse de rotation et le degré de confort requis, le défaut d'homocinétie croissant comme le carré de l'angle de travail. Par contre, les quatre tourillonnements sur aiguilles des bras des croisillons sont protégés par des garnitures tournantes, peu sensibles à la force centrifuge, fiables, faciles à installer et qui présentent une endurance très satisfaisante.

Pour des applications spéciales on a aussi utilisé des joints homocinétiques à billes et à tripodes sur des arbres à haute vitesse. Cependant il a fallu respecter des restrictions d'angularité encore plus sévères qu'avec le cardan, bien que pour des raisons techniques différentes. En effet, les joints à billes sont sujets à un échauffement et une usure croissant rapidement avec l'angularité et de leur côté les joints à tripodes présentent un mouvement relatif d'orbitage inacceptable. Pour ces joints homocinétiques à grande vitesse travaillant à des angles continus limités à 2 ou 4°, les soufflets élastiques de retenue de lubrifiant classiques sont en général considérés comme suffisamment fiables.

Or l'introduction du joint homocinétique centré et à haut rendement décrit par le FR-A-2 566 858 et la demande française non publiée 91 08 048, permet l'installation de lignes de transmission à haute vitesse présentant des brisures continues de 10° à 15°. En effet, ce joint réunit les trois caractéristiques indispensables à la transmission de puissance à haute vitesse avec des angularités continues pratiquement triples de celles autorisées jusqu'alors car il est parfaitement homocinétique, parfaitement centré et peu sujet à l'échauffement et à l'usure. Ces qualités assurent donc le confort du véhicule et la longévité de la ligne d'arbre. Mais, la possibilité d'utiliser ce nouveau joint dépend de la disponibilité d'un dispositif de protection et de retenue de lubrifiant d'égales performances et. endurance, c'est-à-dire, pouvant tourner à haute vitesse sous angle moyen continu de 10 à 15° et ayant une grande longévité dans des conditions extrêmes de températures et d'environnement.

Le but de la présente invention est de concevoir un dispositif de protection et de retenue de lubrifiant convenant pour les joints homocinétiques, coulissants ou non, qui fonctionnent dans des conditions extrêmes, de par leur taille, leur angle de travail usuel et/ou leur vitesse de rotation, ce dispositif devant présenter le cas échéant une fiabilité et une longévité à l'échelle du service attendu dans l'industrie des transports maritimes et ferroviaires.

A cet effet, l'invention concerne un dispositif de protection et de retenue de lubrifiant pour joint de transmission articulé, notamment joint homorinétique, disposé entre deux arbres tournants dont l'un est supporté en rotation par une structure porteuse, et l'autre est mobile angulairement par rapport à la structure.

Il se caractérise en ce qu'il comprend un élément périphérique rigide destiné à être fixé à la structure porteuse et enveloppant au moins partiellement le joint de transmission, l'élément périphérique présentant autour de l'arbre mobile angulairement une ouverture permettant le débattement angulaire de l'arbre, le dispositif comportant en outre entre l'ouverture de l'élément périphérique et l'arbre, des moyens de fermeture étanche comprenant un élément suiveur qui s'oriente avec l'arbre mobile, des moyens pour le tourillonnement étanche et l'arbre à travers l'élément suiveur, et des moyens d'articulation étanche entre l'élément suiveur et l'élément périphérique.

Ainsi, par rapport à l'élément périphérique, l'élément suiveur ne tourne pas et ne se déplace pas axialement, mais il accompagne le mouvement angulaire de l'arbre mobile angulairement qui, lui, tourne et le cas échéant, coulisse à l'intérieur de l'élément suiveur.

L'élément périphérique est articule par rapport à l'élément périphérique rigide fixé d'une manière étanche à la structure porteuse, par exemple la structure d'un véhicule ou d'une machine. En général, l'élément périphérique enveloppe la majeure partie du joint de transmission. Il présente une ouverture juste suffisante pour laisser passage à l'arbre mobile angulairement et autoriser son débattement angulaire, en tenant compte le cas échéant des différentes configurations d'extension ou compression possibles. Il résulte de cette disposition que la ou les jonction(s) articulée(s) entre l'élément suiveur et l'élément périphérique demeurent statiques pendant la rotation du joint sous angle aussi longtemps que l'angle de travail du joint est constant.

Autrement dit, ces jonctions articulées ne se déplacent que lors des modifications de l'angle de travail du joint homocinétique. De plus elles ne sont pas ou que très peu soumises à la pression centrifuge du lubrifiant.

En conséquence, les garnitures d'étanchéité de ces jonctions situées entre l'élément suiveur et l'élément périphérique peuvent être conçues de manière très robuste et précontrainte, telles que les garnitures utilisées dans les applications hydrauliques et sans risque d'usure ni d'échauffement.

La seule étanchéité tournante et éventuellement coulissante, celle de l'élément suiveur sur l'arbre mobile peut utiliser un joint de type conventionnel et éprouvé genre joint à lèvre (SPI) inséré entre l'élément suiveur et l'arbre. La lèvre glisse donc sur l'arbre qui présente un petit diamètre et dans une zone protégée des agressions extérieures par conséquent dans les meilleures conditions de fiabilité et de longévité.

Selon un second aspect de l'invention, celle-ci vise un joint de transmission équipé d'un dispositif selon le premier aspect.

Le joint de transmission peut être du type à billes ou du type où quatre tourillons radiaux, disposés en croisillon à l'extrémité de l'un des arbres, portent quatre galets engagés dans quatre couloirs montés oscillants par rapport à l'autre arbre.

L'invention sera mieux comprise et d'autres caractéristiques de celle-ci apparaîtront dans la description qui suit en référence aux dessins schématiques annexés, illustrant au moyen d'exemples non limitatifs, comment l'invention peut être réalisée et dans lesquels:
- la figure 1 est une vue en coupe longitudinale d'un joint homocinétique coulissant selon l'invention représenté respectivement pour partie en position alignée et pour partie en travail sous angle;
- la figure 2 est une demi-vue en coupe transversale d'un joint selon la figure 1;
- la figure 3 est une demi-vue en coupe longitudinale, d'un joint coulissant, selon une variante de réalisation;
- la figure 4 est une demi-vue en coupe longitudinale, d'un joint non coulissant selon une variante de réalisation;
- la figure 5 est une vue longitudinale, dont moitié en coupe, d'un joint non coulissant, selon une variante de réalisation;
- les figures 6 et 7 sont des vues de détail à échelle agrandie, selon la figure 5 montrant des dispositifs de tourillonnement étanches.

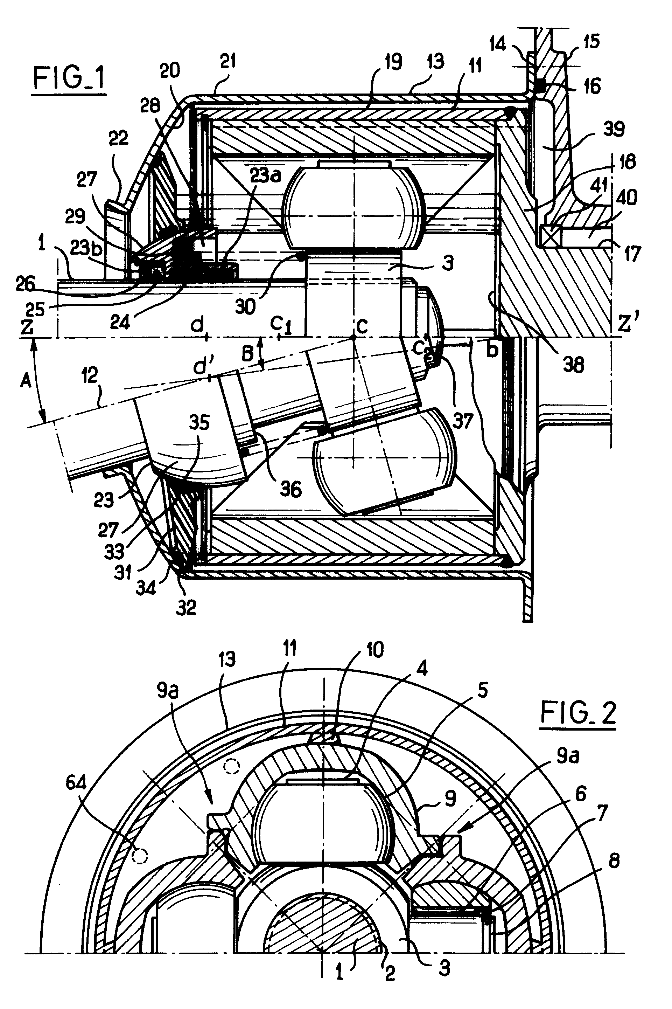

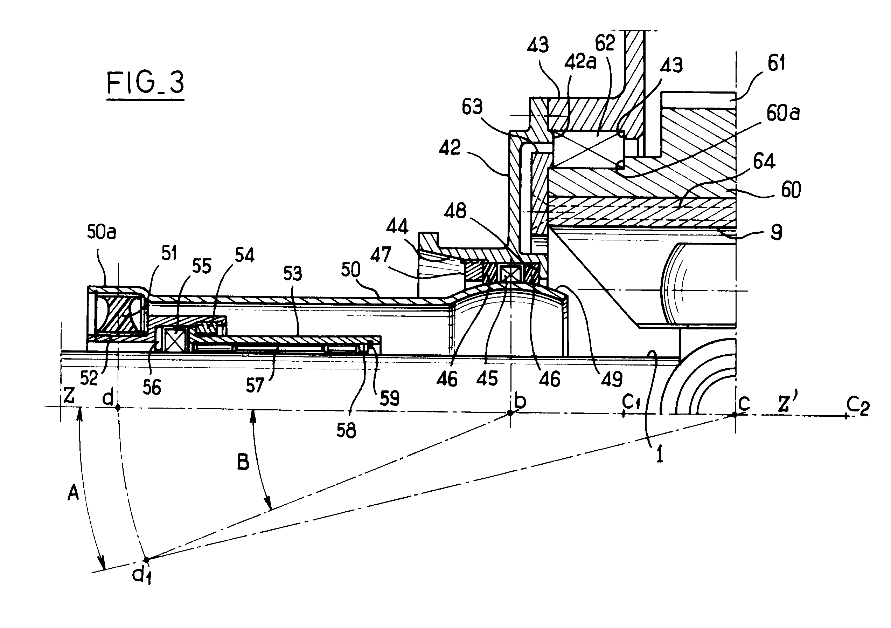

Dans les exemples représentés aux figures 1 et 3, le joint de transmission homocinétique est un joint à quatre galets, connu en soi, du type décrit dans le FR-A-2 566 858 et qui ne sera donc pas redécrit en détail ci-après.

Les figures 1 et 2 représentent selon une première version du dispositif appliquée à un joint homocinétique coulissant tel que défini par le FR-A-2 566 858 et la demande française non publiée 91 08 048, comprenant un arbre de transmission 1 fixé par des cannelures 2 à l'intérieur d'un croisillon 3 comportant quatre tourillons 4 qui reçoivent chacun de manière coulissante et rotative un galet sphérique 5 par l'intermédiaire d'aiguilles 6 retenues par des coupelles 7 et des joncs 8.

Ces galets 5 roulent à l'intérieur de couloirs 9 s'articulant en 10 à l'intérieur d'un barillet ou fût 11 du joint de transmission coulissant. Les couloirs 9 sont reliés entre eux par des accouplements latéraux 9a qui obligent chaque couloir 9 à osciller en opposition de phase par rapport aux deux couloirs 9 voisins. Ces oscillations permettent au joint de travailler sous angle sans aucune tension mécanique. Ces joints à croisillon ont, par rapport aux joints à tipode, l'avantage que le centre du croisillon reste toujours sur l'axe du barillet. Le centre C du croisillon 3, qui est aussi le centre d'articulation du joint, peut se déplacer jusqu'en C₁ lorsque le joint est en élongation maximale, et jusqu'en C₂ lorsque le joint est en compression maximale. L'axe 12 de l'arbre 1 peut dévier d'un angle A relativement à l'axe ZZ′ du barillet 11 (bas de la figure 1).

Le montage est tel que le barillet 11 et l'arbre 17 dont il est solidaire sont supportés en rotation dans une structure porteuse 15, par exemple un carter de groupe moto-propulseur ou de différentiel. L'orientation et la position axiale du barillet 11 par rapport au carter 15 est donc immobile.

Selon l'invention, un élément périphérique 13 en forme de boîtier est fixé par sa collerette 14 au carter 15 du groupe moto-propulseur. Une garniture torique 16 assure l'étanchéité statique entre le boîtier 13 et le carter 15. L'arbre 17 supporté dans le carter 15 porte un plateau 18 soudé ou fixé au fût ou barillet 11 du joint. Le boîtier fixe 13 enveloppe le fût 11 en laissant un jeu radial 19 de quelques millimètres. Il comporte à son extrémité opposée à l'arbre de commande 17 une surface sphérique 20 polie intérieurement, centrée en b sur l'axe ZZ′, réunissant une partie tubulaire 21 du boîtier 13 à une ouverture 22 en forme de goulot qui autorise le débattement angulaire de l'arbre 1. L'arbre 1 tourne et coulisse à l'intérieur d'un élément suiveur, en forme de manchon, par l'intermédiaire d'une cage à aiguilles 24 interposée entre l'arbre 1 et un alésage 23a du manchon 23 ouvert vers l'intérieur du joint. L'étanchéité entre l'arbre 1 et le manchon 23 est assurée par le joint 25 à lèvre, ou de tout autre type connu et éprouvé, placé du côté de l'extérieur du joint de transmission par rapport aux aiguilles 24, dans un autre contre-alésage 23b du manchon 23 ouvert vers l'extérieur du joint et à proximité de la cage 24. Une rondelle de raclage 26 protège le joint 25.

Le manchon 23 comporte extérieurement une surface sphérique polie 27 centrée en d sur l'axe 12 de l'arbre 1, et un évidement annulaire 28 recevant une petite butée à billes ou à aiguilles 29 sur laquelle s'appuie axialement un ressort 30 dont l'autre extrémité est appuyée contre le flanc du croisillon 3. Un élément intermédiaire ou disque oscillant 31 reçoit dans des gorges usinées sur ses bords sphériques externe 32 et interne 33, des garnitures d'étanchéité toriques 34 et 35 ou de toute autre section de type connu. Ses bords externe et interne sphériques 32, 33 présentent des rayons de courbures complémentaires respectivement de la surface sphérique 20 du boîtier 13 et de la surface sphérique 27 du manchon 23.

Le plan de symétrie de la garniture torique 35 est déporté axialement vers l'extérieur du joint par rapport au centre sphérique d du manchon 23.

De même, le plan de symétrie de la garniture torique 34 est déporté axialement vers l'extérieur du joint par rapport au centre sphérique b de la surface 20. On peut donc dissocier les deux liaisons de rotule étanche en déplaçant vers l'intérieur du joint le manchon 23 par rapport au disque 31 et le disque 31 par rapport à la surface 20, mais ceci est empêché en service par la poussée du ressort 30 à l'arrêt, à laquelle s'ajoute pour l'appui contre la surface 20, la pression centrifuge du lubrifiant appliquée au disque 31 pendant la marche. Ceci assure l'étanchéité entre le manchon 23 et le boîtier 13; ainsi l'arbre 1 tourne librement à l'intérieur du manchon 23 qui est immobile par rapport au carter 15 sauf pendant les variations de l'angle de travail A du joint.

Lorsque le joint est en ligne (partie supérieure de la figure 1), les centres sphériques b et d sont situés de part et d'autre du segment géométrique C₁-C₂ le long duquel est susceptible de se trouver le centre C d'articulation du joint de transmission. Le centre b de la surface sphérique 20 liée au boîtier 13 est situé sur l'axe ZZ′ du barillet 11 au-delà du segment C₁-C₂ par rapport aux moyens de fermeture constitués par le manchon 23 et le disque oscillant 31. Le centre d (ou d' lorsque le joint est sous angle A, moitié inférieure de la figure 1), est situé sur l'axe 12 de l'arbre 1.

L'extrémité 36 du manchon 23 dirigée vers l'intérieur du joint vient en butée contre le croisillon 3 en limite d'extension du joint et une butée élastique sphérique 37 fixée à l'extrémité de l'arbre 1 vient en appui contre un fond 38 du plateau 18 en limite de compression du joint.

Lors de la mise sous angle A le centre d de la surface sphérique 27 du manchon 23 passe en d' et l'axe db du disque oscillant 31 vient en d′b faisant un angle B avec l'axe ZZ′ du barillet 11.

Ainsi le disque 31 a oscillé d'un angle B autour du centre b de la surface sphérique 20 du boîtier 13 et d'un angle égal à: (A-B) relativement au manchon 23. Autrement dit, l'angle global A fait par l'arbre est partagé entre les deux garnitures d'étanchéité 34 et 35.

Cette oscillation une fois accomplie, le joint homocinétique étant en rotation, les garnitures 34 et 35 ne se déplacent plus sur leurs surfaces de glissement respectives 20, 27 car le disque 31 et le manchon 23 ne tournent pas.

En effet, les couples qui seraient nécessaires pour entretenir la rotation du disque 31 relativement au boîtier 13, ou du manchon 23 relativement au disque 31, dépendent de la force d'appui et du coefficient de glissement des garnitures 34 et 35 sur leurs portées sphériques 20 et 27. Or ces couples sont très supérieurs à la légère traînée de rotation du roulement à aiguilles 24 et de la butée 29.

Ainsi, le disque 31 et le manchon 23 ne tournent pas et de plus leurs mouvements se réduisent à des oscillations d'amplitude inférieure aux variations de l'angularité A de l'arbre 1 lorsque celles-ci se produisent. Autrement dit, si l'angularité A de l'arbre 1 est constante, les garnitures 34 et 35 demeurent statiques sur leurs portées 20, 27.

Cette caractéristique avantageuse du dispositif permet d'installer des garnitures d'étanchéité robustes et précontraintes ne subissant que des déplacements lents et d'amplitude limitée et donc non soumises à l'usure et à l'échauffement.

En conséquence, l'étanchéité sera assurée d'une manière fiable et durable même aux très grandes vitesses de rotation et pour des angles relativement importants.

Par ailleurs, pour cette version, le lubrifiant du joint homocinétique peut être commun avec celui du mécanisme contenu dans le carter 15 du groupe motopropulseur ou différentiel par exemple.

Dans ce cas l'intercommunication s'effectue par les espaces 19, 39 et 40. Si on souhaite séparer les deux lubrifiants on interpose un joint à lèvre 41 (par exemple un joint de type SPI) entre l'arbre 17 et le carter 15 comme représenté schématiquement.

Dans l'exemple représenté à la figure 3, l'élément périphérique se réduit à un couvercle 42 fixé au carter 43 de la machine. Le couvercle 42 porte dans son ouvertures 44 en forme d'alésage une garniture d'étanchéité oscillante 45 comprise entre deux bagues de glissement 46, elles-mêmes retenues par un écrou 47 contre l'épaulement 48 de l'alésage 44. Les bagues de glissement 46 comportent des alésages sphériques complémentaires d'une surface extérieure sphérique 49 réalisée à une extrémité, dirigée vers l'intérieur du joint, d'un raccord tubulaire rigide 50. Le centre b de cette surface sphérique 49 est placé sur l'axe ZZ′ du barillet 60 et sensiblement dans le plan de la garniture 45.

La seconde extrémité 50a du raccord 50, dirigée vers l'extérieur du joint par rapport au couvercle 42, reçoit intérieurement un anneau élastique en élastomère 51 qui est emmanché sur l'extrémité d'un fourreau 52 coaxial avec l'arbre 1 du joint homocinétique. L'anneau 51 réalise sensiblement une liaison de rotule étanche entre le raccord 50 et le fourreau 52. Le centre d de cette liaison de rotule étanche est situé sur l'axe de l'arbre 1 à distance relativement grande de l'ouverture 44, en direction de l'extérieur du joint. Le fourreau 52 est bloqué contre un manchon coulissant 53 par une bague filetée 54 qui emprisonne une garniture d'étanchéité tournante et glissante 55 ainsi qu'une rondelle de protection 56. L'arbre 1 tourne et glisse dans le manchon 53 par l'intermédiaire d'une cage à double rangée d'aiguilles 57, retenue par une rondelle 58 et un jonc d'arrêt 59.La cage 57 est située à proximité de la garniture 55, du côté de l'intérieur du joint par rapport à celle-ci.

La rotation du barillet 60 entraîné par une roue dentée 61 s'effectue grâce à un roulement 62 emboîté dans le carter 43. La bague intérieure du roulement 62, appuyée contre un épaulement 60a du barillet 60, et les couloirs 9 du joint homocinétique sont retenus sur le barillet 60 par un flasque 63 bridé axialement par des tirants 64 passant dans l'espace libre entre les couloirs 9 (comme représenté en traits interrompus sur la partie gauche de la figure 2) pour aller se visser dans un fond de barillet, à moins que le barillet ne comporte des bossages entre les couloirs 9. Si le roulement 62 comporte une étanchéité extérieure, le lubrifiant du joint est séparé du lubrifiant du roulement 62 et de la roue dentée 61. Le couvercle 42 comporte un collet 42a maintenant la bague extérieure du roulement 62 contre un épaulement 43a du carter 43.

Pendant la rotation du joint lors de la mise sous angle A de l'arbre 1, le centre d d'oscillation de l'anneau élastique 51 vient en d' et l'axe bd du raccord tubulaire 50 vient en bd′ faisant un angle B avec l'axe ZZ′ du barillet 60. Ceci entraîne une oscillation B de la surface sphérique 49 à l'intérieur des bagues 46 et de la garniture 45 et une oscillation égale à: (A-B) de l'anneau élastique 51. Comme dans la première version et pour les mêmes raisons, une fois cet angle A établi, la garniture 45 ne subit aucun glissement et l'anneau 51 aucune fatigue, puisque le manchon 53 et le raccord tubulaire 50 sont immobiles.

Il est avantageux dans cette version de déporter le roulement à aiguilles 57 axialement vers l'intérieur du joint relativement à l'anneau d'oscillation 51, comme cela est représenté.

Ceci permet pour un même encombrement axial d'accroître la distance db donc de réduire l'angle B et par ailleurs de protéger la surface de l'arbre 1 sur laquelle tourillonnent les aiguilles du roulement 57 et glisse la garniture 55.

Pour certaines applications, la cage à aiguilles 57 peut être remplacée avantageusement par une bague spéciale anti-friction de type connu.

Comme dans la première version, l'arbre 1 peut coulisser librement à l'intérieur du manchon 53 et le centre C occupe les positions C₁ en extension maximale du joint et C₂ en compression maximale du joint.

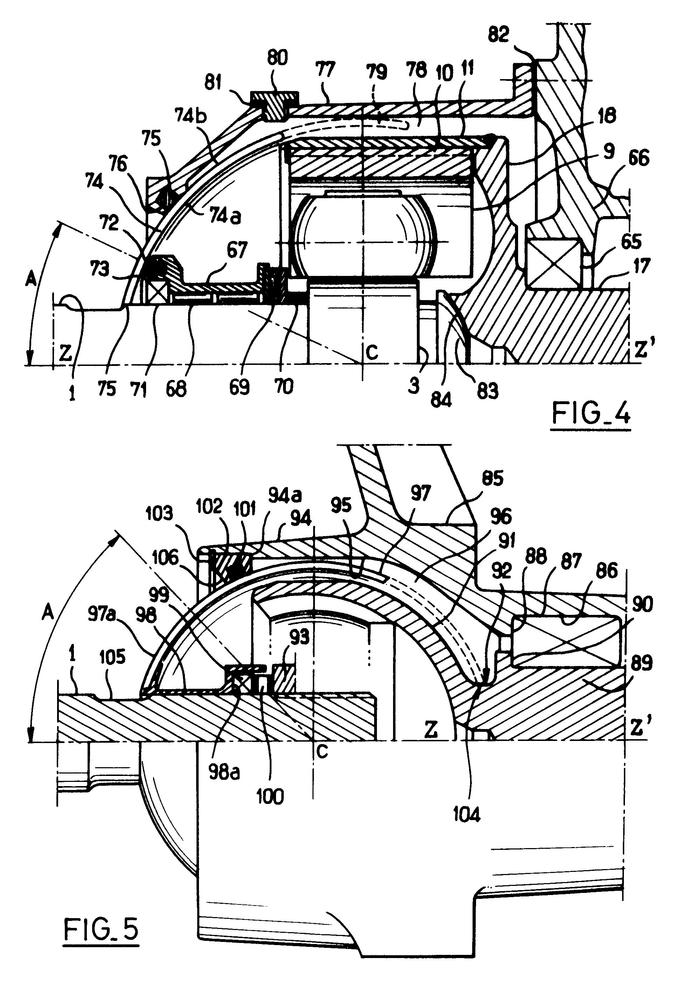

Selon une variante de réalisation représentée sur la figure 4, le système d'étanchéité coopère à la retenue axiale du joint homocinétique afin d'assurer la fixité de son centre d'articulation C.

Les couloirs 9 très courts du fait de l'absence de coulissement, sont articulés en 10 dans le fût 11 soudé ou faisant corps avec le plateau 18 et l'arbre de commande 17 tourillonnant par l'intermédiaire d'un roulement 65 dans le carter 66 de différentiel ou de boîte de vitesses du véhicule.

Un élément suiveur ou manchon 67 entoure l'arbre 1 par l'intermédiaire d'une cage à double rangée d'aiguilles 68 et s'appuie axialement sur le croisillon 3 par l'intermédiaire d'une butée à aiguilles ou à billes 69 calée par une entretoise 70. Ce manchon 67 comprend d'une part, vers l'extérieur du joint par rapport aux aiguilles 68, une garniture à lèvre genre SPI 71 assurant l'étanchéité avec l'arbre 1 tournant à l'intérieur du manchon 67 et d'autre part, une garniture statique 72 assurant l'étanchéité et le rattrapage de petits défauts éventuels d'alignement entre la face extérieure 73 du manchon 67 et la face interne 74a d'une coupelle sphérique 74 guidée sur l'arbre 1 par son orifice 75. Le centre sphérique de la coupelle 74 et en particulier de sa surface extérieure sphérique 74b est confondu avec le centre d'articulation C. La surface 74b est polie et durcie par chromage dur par exemple. Elle porte sur une garniture torique 75 ou d'autre modèle connu, logée dans une gorge circulaire 76 usinée dans le nez d'un élément périphérique ou boîtier 77 fixé au carter 66. L'espacement radial 78 entre l'extérieur du barillet 11 et l'intérieur du boîtier 77 est suffisant pour laisser passage à la coupelle 74, représentée en traits mixtes 79, lors de la mise sous angle A de l'arbre 1.

Un bouchon 80 permet l'introduction du lubrifiant dans le boîtier 77 et le contrôle du niveau. L'étanchéité est assurée par les joints 81 pour le bouchon 80 et 82 pour la jonction boîtier 77/carter 66. Si le roulement 65 est muni d'une étanchéité extérieure, le lubrifiant du joint homocinétique est séparé du lubrifiant du groupe motopropulseur ou du différentiel situés dans le carter 66.

Lors de la mise en service sous angle A de l'arbre 1, angle dont la valeur peut atteindre 25 ou 30 degrés, la garniture 75 glisse sur la surface extérieure sphérique 74b polie de la coupelle 74.

Le glissement n'apparaît exclusivement qu'aux modifications d'angularité de l'arbre 1, relativement à l'axe ZZ′ de l'arbre de commande 17.

La retenue axiale en compression est assurée par la butée sphérique en matériau anti-friction 83 ayant pour centre le centre C d'articulation du joint, et qui est solidaire de l'arbre 1 et rotule contre la portée sphérique concave 84 complémentaire portée par le fond intérieur du plateau 18.

On obtient ainsi une protection et une retenue de lubrifiant fiables et de durée illimitée qui peut d'ailleurs utiliser avantageusement le lubrifiant du groupe moteur en assurant une étanchéité efficace de l'ensemble.

La figure 5 représente une version du dispositif appliquée plus particulièrement aux joints de roues motrices de véhicules à traction avant, bien que ces joints ne tournent qu'à des vitesses limitées à 2 000 tours/minute et que leur diamètre ne dépasse guère 90 ou 100 millimètres. On admet que 90% des défaillances de ces joints sont imputables aux détériorations des soufflets conventionnels en élastomère dont les plis actifs sont toujours exposés aux projections, chocs et autres agressions extérieures chimiques ou physiques et pour certaines applications soumis aux températures extrêmes, feu ou très grands froids.

Cette protection et retenue de lubrifiant autorisent une angularité A de 47° et ceci dans un encombrement inférieur à celui des soufflets conventionnels mais avec une fiabilité et une durée de vie incomparablement accrues.

Le pivot de roue 85 reçoit dans son alésage 86 le roulement 87 bloqué contre un épaulement 88 de cet alésage. La fusée porte-roue 89 bloquée par son épaulement 90 contre la bague intérieure du roulement 87, fait corps avec le bol 91 du joint homocinétique auquel elle est reliée par un collet 92.

Le joint homocinétique est typiquement du type à billes (encore appelé "RZEPPA") dans lequel le bol et une noix fixée à l'extrémité de l'arbre 1 forment ensemble une sorte de rotule dans laquelle l'accouplement en rotation autour des axes des arbres est assuré par des billes prisonnières de cavités prévues dans la face intérieure du bol et la face extérieure de la noix.

L'arbre de commande 1 est fixé à l'intérieur de la noix 93 du joint homocinétique dont le centre d'articulation est en C. Le pivot 85 comporte par ailleurs sur la face opposée au roulement 87 un boîtier fixe 94 coaxial à la fusée 89 et présentant une ouverture cylindrique 95 entourant le bol 91 du joint homocinétique en laissant un jeu radial 96 suffisant pour permettre le débattement angulaire d'une coupelle sphérique 97 comportant une ouverture-centrale dans laquelle tourillonne l'arbre 1 et dont la surface extérieure durcie et polie par chromage dur est centrée en C.

Cette coupelle 97 tourillonne librement sur l'arbre 1 grâce à un manchon 98 en matériau anti-friction soudé, collé ou fixé mécaniquement à une de ses extrémités sur le fond de la coupelle 97. Ce manchon 98 comprend à son autre extrémité, dirigée vers l'intérieur du joint, un chambrage 98a recevant une garniture d'étanchéité tournante à lèvre 99, dont l'armature s'appuie sur une bague de butée axiale 100 comprenant une rondelle élastique genre "Ondulex" comprise entre deux rondelles anti-friction. Cette bague de butée est elle-même retenue par une face de la noix 93 du joint homocinétique.

La coupelle 97 porte par sa surface extérieure sphérique polie 97a, sur une garniture d'étanchéité 101 logée dans une bague 102 fabriquée en matériau antifriction et emboîtée dans un chambrage 94a usiné dans l'ouverture 95 du boîtier fixe 94 et retenue par le jonc d'arrêt 103.

Pendant la rotation du joint sous un angle A constant, l'arbre 1 dont la portée est durcie et polie tourne à l'intérieur du manchon 98 et de la garniture à lèvre 99. Compte tenu des faibles vitesses linéaires et pressions en jeu, le tourillonnement lisse est acceptable.

Mais la garniture principale 101 située sur un grand diamètre ne subit aucun glissement. En effet, cette garniture 101 ne glisse sur la surface sphérique 97a de la coupelle 97 que lors des variations de l'angle de travail.

On peut donc prévoir une étanchéité robuste et précontrainte sans craindre l'usure et l'échauffement.

Lorsque l'arbre 1 fait l'angle maximum A avec l'axe ZZ′ de la fusée 89, le bord libre de la coupelle 97 vient buter en 104 à proximité du collet 92 de ladite fusée et le dégagement 105 de l'arbre 1 vient à proximité du flanc oblique 106 de la bague 102.

Comme pour la version précédente, le même lubrifiant peut avantageusement assurer la lubrification du joint homocinétique et celle du roulement 87 de fusée 89. Mais on peut séparer les deux organes en prévoyant une étanchéité extérieure sur le roulement 87, étanchéité qui est elle-même protégée des agressions extérieures par l'enceinte close de l'espace 96.

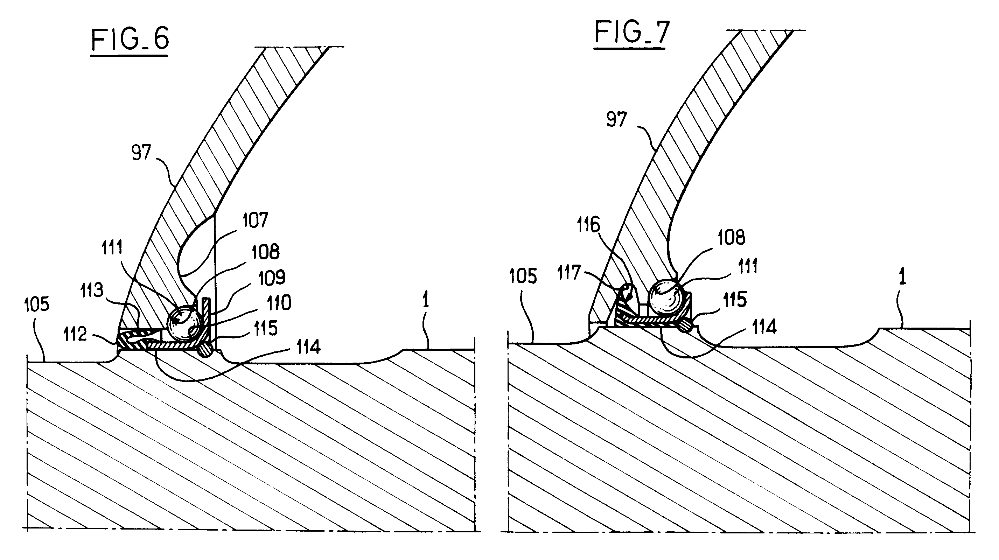

Les figures 6 et 7 représentent à grande échelle le détail de deux dispositifs de tourillonnement étanche à billes de la coupelle 97 directement sur l'arbre 1.

Selon la figure 6, il est prévu près de l'orifice de la coupelle 97 un profil 107 avantageusement réalisé par formage à froid axial assurant une précision suffisante et un bon état de surface pour constituer un chemin de roulement extérieur 108, tourné obliquement vers l'intérieur du joint et vers l'axe de l'arbre 1.

Une bague à collerette emboutie 109 porte un chemin de roulement intérieur 110 en opposition avec le chemin de roulement 108 pour assurer un contact oblique sur des billes 111. Le collet cylindrique de la bague 109 porte avec adhérisation une lèvre 112 en élastomère propre au frottement qui vient en contact avec l'alésage 113 de la coupelle 97. Lors du moulage de la lèvre 112, une mince couche d'élastomère 114 adhère à l'alésage du collet et assure ensuite l'étanchéité sur l'arbre 1.

Lors de l'assemblage, un jonc 115 est encliqueté sur l'arbre 1 préalablement au montage de la bague 102 et du jonc 103 dans l'alésage du boîtier fixe 94.

Selon la figure 7, la lèvre d'étanchéité 116 est dirigée radialement vers l'extérieur et vient en contact avec le flanc d'une gorge radiale 117 qui peut être réalisée avantageusement en même temps que le chemin de roulement 108 dans l'orifice de la coupelle 97, par moletage radial à froid. Le mode d'assemblage est identique à celui utilisé pour la réalisation selon la figure 6.

Ces deux modes de réalisation du tourillonnement de la coupelle 97 sur l'arbre 1 par roulement à contact oblique sont particulièrement avantageux pour leur fiabilité et leur prix.

## Revendications

1. Dispositif de protection et de retenue de lubrifiant pour joint de transmission articulé, notamment joint homocinétique, disposé entre deux arbres tournants dont l'un (17) est supporté en rotation par une structure porteuse (15, 43, 66, 85), et l'autre (1) est mobile angulairement par rapport à la structure, caractérisé en ce qu'il comprend un élément périphérique rigide (13, 42, 77, 94, 102) destiné à être fixé à la structure porteuse et enveloppant au moins partiellement le joint de transmission, l'élément périphérique présentant autour de l'arbre mobile angulairement une ouverture (22, 44, 76, 106) permettant le débattement angulaire de l'arbre, le dispositif comportant en outre, entre l'ouverture de l'élément périphérique et l'arbre, des moyens de fermeture étanche comprenant un élément suiveur (27, 28 ; 52, 53, 74, 67 ; 97, 98) qui s'oriente avec l'arbre mobile (1), des moyens (24 ; 55, 57 ; 68, 71 ; 98, 99, 100) pour le tourillonnement étanche de l'arbre à travers l'élément suiveur, et des moyens d'articulation étanche (20, 31, 27, 31 ; 46, 49, 51 ; 74b, 75 ; 97a, 101) entre l'élément suiveur et l'élément périphérique.

2. Dispositif selon la revendication 1, caractérisé en ce que les moyens de fermeture et l'élément périphérique comprennent l'un une paroi sphérique (20, 49, 74b, 97a) centrée sur l'axe de l'arbre supporté en rotation (17) et l'autre une garniture annulaire d'étanchéité mobile (34, 45, 75, 101) entourant l'arbre mobile angulairement (1) et glissant de manière étanche sur la paroi sphérique.

3. Dispositif selon la revendication 2, pour un joint dont le centre d'articulation (C) est fixe par rapport à l'arbre (17) supporté en rotation, caractérisé en ce que la paroi sphérique (74b, 97a) est centrée au centre d'articulation (C) du joint de transmission, et en ce que la paroi sphérique et la garniture d'étanchéité sont solidaires l'une de l'élément périphérique (77 ; 94, 102) et l'autre de l'élément suiveur (67, 74 ; 98).

4. Dispositif selon la revendication 3, caractérisé en ce que l'élément suiveur comprend une coupelle sphérique (74, 97) définissant sur sa face extérieure ladite paroi sphérique (74b, 94a), et un manchon (67, 98) qui est relié de manière étanche avec la coupelle et à travers lequel tourillonne l'arbre mobile angulairement (1).

5. Dispositif selon la revendication 4, caractérisé en ce que pour sa liaison étanche avec la coupelle, le manchon est appuyé de manière étanche contre la face intérieure (74a) de la coupelle.

6. Dispositif selon l'une des revendications 3, caractérisé en ce que l'élément suiveur comprend une coupelle sphérique (97) définissant sur sa face extérieure ladite paroi sphérique (97a) et comportant pour le passage de l'arbre mobile angulairement (1) une ouverture centrale munie d'un chemin de roulement (108) pour des billes (111) de rotation de l'arbre mobile angulairement (1).

7. Dispositif selon la revendication 6, caractérisé en ce que le chemin de roulement (108) est tourné obliquement vers l'intérieur du joint et vers l'axe (12) de l'arbre mobile angulairement (1).

8. Dispositif selon la revendication 6 ou 7, caractérisé en ce qu'il comprend une bague (109) destinée à être rapportée fixement sur l'arbre pour définir un chemin de roulement opposé (110) pour les billes (111), et un joint à lèvre (112) ayant une extrémité assurant le contact étanche entre l'arbre mobile angulairement (1) et la bague (109), et une autre extrémité formant lèvre (112) en contact glissant sur la coupelle (97).

9. Dispositif selon l'une des revendications 1 ou 2, pour un joint de transmission dont le centre d'articulation (C) est mobile par rapport à l'arbre supporté en rotation, caractérisé en ce que les moyens de fermeture comprennent un élément intermédiaire (31, 50) qui ferme un intervalle annulaire entre l'élément périphérique (13, 42) et l'élément suiveur (27, 28 ; 52, 53) et est en liaison de rotule étanche avec l'élément périphérique selon un premier centre (b) et avec l'élément suiveur selon un deuxième centre (d).

10. Dispositif selon la revendication 9, caractérisé en ce que le premier et le deuxième centre (b, d) sont situés de part et d'autre du centre d'articulation (C) du joint de transmission lorsque le joint de transmission est en position alignée.

11. Dispositif selon l'une des revendications 10, caractérisé en ce que le premier centre (b) est situé au-delà du centre d'articulation (C) du joint de transmission par rapport aux moyens de fermeture (27, 31).

12. Dispositif selon l'une des revendications 9 à 11, caractérisé en ce que le premier et le deuxième centre (b, d) sont tous les deux déportés vers l'intérieur du joint de transmission par rapport aux moyens de fermeture (27, 31).

13. Dispositif selon l'une des revendications 9 à 12, caractérisé en ce que les deux liaisons de rotule étanche sont démontables par déplacement, vers l'intérieur du joint, de l'élément suiveur (27) par rapport à l'élément intermédiaire (31) et de l'élément intermédiaire (31) par rapport à l'élément périphérique (13), et en ce qu'un ressort de compression (30) est monté en appui contre le côté intérieur de l'élément suiveur (27) pour assurer la cohésion des deux liaisons de rotule étanche.

14. Dispositif selon la revendication 9, caractérisé en ce que l'élément intermédiaire est un raccord tubulaire (50) s'étendant vers l'extérieur du joint autour de l'arbre mobile angulairement (1) par rapport à l'ouverture (44) de l'élément périphérique, le deuxième centre (d) étant déporté vers l'extérieur du joint de transmission par rapport à l'ouverture (44) de l'élément périphérique.

15. Dispositif selon l'une des revendications 14, caractérisé en ce que la liaison de rotule étanche (51) entre l'élément suiveur (52, 53) et le raccord tubulaire (50) est déportée vers l'extérieur du joint par rapport à un montage rotatif coulissant (57) entre l'élément suiveur (52, 53) et l'arbre mobile angulairement (1).

16. Dispositif selon l'une des revendications 9 à 15, caractérisé en ce que l'une au moins des liaisons de rotule étanche est assurée par un bloc annulaire en élastomère (51).

17. Joint de transmission qui relie de manière articulée un organe rotatif (11, 91) supporté en rotation par rapport à un carter (15, 43, 66, 85) et un organe rotatif (1) mobile angulairement par rapport à l'organe rotatif supporté en rotation, caractérisé en ce qu'il est équipé d'un dispositif de protection selon la revendication 1 ou 2.

18. Joint de transmission selon la revendication 17, du type coulissant, caractérisé en ce que l'élément suiveur (27) du dispositif de protection a une fonction de butée de limite de coulissement à l'extension pour le joint de transmission.

19. Joint de transmission selon la revendication 17, caractérisé en ce que l'organe supporté en rotation est un barillet (11) dans lequel quatre couloirs (9) sont montés oscillants et sont couplés angulairement pour osciller en opposition de phase, et l'organe mobile angulairement comprend un croisillon (3) comportant quatre bras engagés chacun dans l'un des couloirs (9).

20. Joint de transmission selon la revendication 19, caractérisé en ce que l'élément suiveur (67) de son dispositif de protection est immobilisé axialement entre le croisillon (3)et l'élément périphérique (77) de manière à immobiliser le centre d'articulation (C) du joint de transmission.

21. Joint de transmission selon la revendication 17, caractérisé en ce qu'il est du type à billes à centre d'articulation (C) fixe, avec un bol (91) solidaire de l'organe supporté en rotation et une noix (93) appartenant à l'organe mobile angulairement (1), et en ce que l'élément suiveur comprend une coupelle sphérique (97) qui entoure partiellement le bol et une garniture (101) solidaire de l'élément périphérique (94).

22. Joint de transmission selon la revendication 21, caractérisé en ce qu'à l'angle de travail (A) maximal, l'arbre (1) solidaire de la noix (93) est adjacent à la garniture (103) et le bord libre de la coupelle sphérique (97) est adjacent à un collet (92) de liaison du bol avec un arbre (89).
